# EUROPÄISCHE PATENTANMELDUNG

(11) **EP 3 916 970 A1**
(43) Veröffentlichungstag der Anmeldung: **01.12.2021**
(21) Anmeldenummer: 21174532.8
(22) Anmeldetag: 18.05.2021
(51) Int. Cl.: H02K 15/095

(54) **NADELWICKELVORRICHTUNG ZUM BEWICKELN EINES ELEKTROMAGNETISCH WIRKSAMEN BAUTEILS EINER ELEKTRISCHEN MASCHINE SOWIE VERFAHREN ZUM BETREIBEN EINER NADELWICKELVORRICHTUNG**

(30) Priorität: 28.05.2020 DE 102020114398
(71) Anmelder: Audi AG, 85045 Ingolstadt (DE); VAF GmbH, 73441 Bopfingen (DE)
(72) Erfinder: Fischer, Matthias, 73497 Tannhausen (DE); Braun, Thomas, 73469 Riesbürg (DE); Westermaier, Christian, 85229 Indersdorf (DE); Gerngroß, Martin, 85125 Kinding (DE)
(74) Vertreter: Schorr, Peter Karl

(57) **Zusammenfassung**

Die Erfindung betrifft eine Nadelwickelvorrichtung (2) zum Bewickeln eines elektromagnetisch wirksamen Bauteils (4) einer elektrischen Maschine, wie Stator oder Rotor, mit mindestens einer Rahmeneinheit (6), mit mindestens einer Wickelnadel (10), die mit einem Ende an der Rahmeneinheit (6) um eine Rotationsachse (12) dreh- oder schwenkbar festlegbar oder festgelegt ist und die an ihrem freien Ende eine Drahtförderdüse (14) aufweist, mit mindestens einem Schwenkantrieb (18), durch den die Wickelnadel (10) automatisch um die Rotationsachse (12) dreh- oder schwenkbar ist, mit mindestens einer Drahtzuführung (38), , und mit mindestens einem in der Rahmeneinheit (6) angeordneten Sensormittel (42), durch das mittelbar oder unmittelbar eine auf den Draht (16) wirkende Kraft erfassbar ist und mit mindestens einer Steuereinheit (44), der mindestens eines des mindestens einen Sensormittels (42) funktional zugeordnet ist und durch die der Schwenkantrieb (18) ansteuerbar ist, um einen Winkel zwischen Drahtförderdüse (14) und Bauteildrehachse (8) zumindest in Abhängigkeit der Position der Rahmeneinheit (6) bezüglich des Bauteils (4) und der erfassten am Draht (16) wirkenden Kraft einzustellen.

## Beschreibung

Die Erfindung betrifft eine Nadelwickelvorrichtung zum Bewickeln eines elektromagnetisch wirksamen Bauteils einer elektrischen Maschine sowie ein Verfahren zum Betreiben einer Nadelwickelvorrichtung.

Aus dem Stand der Technik ist bekannt, elektromagnetisch wirksame Bauteile für elektrische Maschinen, insbesondere Statoren, mit Draht zu bewickeln, um diese für den Gebrauch in elektrischen Maschinen als Stator zu verwenden. Hierbei weisen die Statoren Grundkörper auf, die hohlzylindrisch ausgebildet sind und an ihren quer zur Zylinderachse verlaufenden Enden Wickelköpfe aufweisen, um die ein elektrisch leitender Draht wickelbar ist. Die Statoren sind meist aus geschichteten und gegeneinander isolierten Blechen gefertigt. Im Inneren des Stators sind zur Erzeugung eines Drehfeldes dreiphasig elektrische Wicklungen vorgesehen, welche längs der axialen Erstreckung des Stators in Statornuten angeordnet sind, wobei an den axialen Enden des Stators die Wickelköpfe angeordnet sind. Um diese sind die Drähte als Wickelstränge der jeweiligen Wicklung von einer Statornut in eine andere geführt.

Der Wicklungsdraht ist zumeist aus Kupfer gefertigt und von einer Isolationslackschicht überzogen.

Zum Wickeln des Drahts sind Nadelwickelvorrichtungen bekannt, bei denen Draht durch eine Drahtförderdüse aus der Nadelwickelvorrichtung führbar ist. Hierbei knickt der Draht beim Verlassen der Drahtförderdüse um einen Winkel ab, wodurch im Draht eine hohe Spannung entstehen kann. Dieses kann zu einem Überstrapazieren des Drahts während des Wickelprozesses führen und die Qualität der Wicklungen des Stators nachteilig beeinflussen.

Aus dem Stand der Technik ist es bekannt, eine Messung der im Draht vorherrschenden Kräfte durchzuführen, bevor der Draht der Rahmeneinheit zugeführt wird. Durch Umlenkungen des Drahts innerhalb der Rahmeneinheiten, beispielsweise über eine oder mehrere Rollen, werden hierbei bei den bekannten Nadelwickelvorrichtungen, bzw. bei den Verfahren zum Betreiben der bekannten Nadelwickelvorrichtungen, Schätzwerte für die Biegekräfte angenommen. Die am Draht wirkenden Kräfte können zu einer plastischen Verformung des Drahtes führen, wenn die Biegekräfte einen Schwellenwert übersteigen. Die tatsächlich am Draht vorherrschenden Kräfte können von den geschätzten Werten stark abweichen.

Eine Aufgabe eines Ausführungsbeispiels der Erfindung ist, eine Nadelwickelvorrichtung zum Bewickeln eines Bauteils einer elektrischen Maschine sowie ein Verfahren zum Betreiben einer derartigen Nadelwickelvorrichtung vorzuschlagen, bei der ein genaueres und Drahtschonenderes Wickeln ermöglicht ist.

Diese Aufgabe wird gelöst durch eine Nadelwickelvorrichtung zum Bewickeln eines elektromagnetisch wirksamen Bauteils einer elektrischen Maschine, wie Stator oder Rotor, mit mindestens einer Rahmeneinheit, mit mindestens einer Wickelnadel, die mit einem Ende an der Rahmeneinheit um eine Rotationsachse dreh- oder schwenkbar festlegbar oder festgelegt ist und die an ihrem freien Ende eine Drahtförderdüse aufweist, mit mindestens einem Schwenkantrieb, durch den die Wickelnadel automatisch um die Rotationsachse dreh- oder schwenkbar ist, mit mindestens einer Drahtzuführung, und mit mindestens einem in der Rahmeneinheit angeordneten Sensormittel, durch das mittelbar oder unmittelbar eine auf den Draht wirkende Kraft erfassbar ist und mit mindestens einer Steuereinheit, der mindestens eines des mindestens einen Sensormittels funktional zugeordnet ist und durch die der Schwenkantrieb ansteuerbar ist, um einen Winkel zwischen Drahtförderdüse und Bauteildrehachse zumindest in Abhängigkeit der Position der Rahmeneinheit bezüglich des Bauteils und der erfassten am Draht wirkenden Kraft einzustellen.

Dadurch, dass die Nadelwickelvorrichtung mindestens ein in der Rahmeneinheit angeordnetes Sensormittel umfasst, ist eine Messung der auf den Draht wirkenden Kräfte kurz vor Verlassen der Nadelwickelvorrichtung ermöglicht. Hierdurch ist eine Toleranzkette und/oder Fehlerkette reduziert und eine Abschätzung der tatsächlich auf und/oder in den/dem Draht wirkenden Kräfte bei Verlassen der Drahtförderdüse verbessert, wodurch sich der Stator oder Rotor schonender wickeln und ein verbessertes Wicklungsergebnis erzielen lässt.

Die Nadelwickelvorrichtung, insbesondere die Rahmeneinheit, kann innerhalb des Bauteils parallel zur Bauteildrehachse verfahren werden, um den Draht innerhalb des Bauteils zu wickeln. Darüber hinaus kann die Rahmeneinheit außerhalb des Bauteils quer oder schräg bezüglich der Bauteildrehachse bewegt werden. Wenn die Rahmeneinheit quer oder schräg bezüglich der Bauteildrehachse bewegt wird, kann ein Winkel zwischen dem aus der Drahtförderdüse unmittelbar austretenden Draht und dem innerhalb der Drahtförderdüse geförderten Draht ein derart spitzer Winkel auftreten, dass die im Draht vorherrschenden Kräfte erhöht sind.

Dadurch, dass die Nadelwickelvorrichtung einen Schwenkantrieb umfasst, kann beim Bewegen der Rahmeneinheit die Wickelnadel ebenfalls gedreht werden, wodurch der Winkel zwischen Draht und Drahtförderdüse flacher ist und die im oder am Draht vorherrschenden Kräfte reduziert sind.

Dadurch, dass die Nadelwickelvorrichtung eine Steuereinheit umfasst, der das Sensormittel zuordenbar ist und durch die der Schwenkantrieb ansteuerbar ist, kann hierdurch auf einfache Weise die Wickelnadel gedreht werden, wenn ein Erreichen oder Überschreiten einer bestimmten Kraft durch die Steuereinheit festgestellt wird, um einen Winkel zwischen unmittelbar aus der Drahtförderdüse ausgetretenen Draht und dem innerhalb der Drahtförderdüse verlaufenden Draht einen beschriebenen Winkel abzuflachen.

Wenn das Bauteil beispielsweise einen Stator umfasst, kann die Rahmeneinheit derart ausgebildet sein, dass sie die innerhalb des Bauteils parallel zu einer Bauteildrehachse und außerhalb des Bauteils schräg oder quer zur Bauteildrehachse bewegbar ist.

Bei einer Ausführungsform der Nadelwickelvorrichtung, kann diese mindestens ein in der oder an der Rahmeneinheit angeordnetes Umlenkmittel umfassen, durch das ein Draht in seiner Bewegungsrichtung umlenkbar und der Drahtförderdüse bezüglich weiterer Komponenten berührungsfrei zuführbar ist. Hierdurch die Gefahr einer Beschädigung oder Abnutzung des Drahts reduziert.

Das Sensormittel kann an einer beliebigen Stelle der Rahmeneinheit vorgesehen sein. Eine Toleranzkette und/oder eine Fehlerkette lässt sich reduzieren, wenn mindestens eines des mindestens einen Sensormittels unmittelbar in oder an der Drahtförderdüse anordenbar oder angeordnet ist und/oder wenn mindestens eines des mindestens einen Sensormittels unmittelbar in oder an dem Umlenkmittel anordenbar oder angeordnet ist, durch das eine auf das Umlenkmittel wirkende Kraft erfassbar ist.

Wenn das mindestens eine Sensormittel unmittelbar in oder an der Drahtförderdüse angeordnet ist, ist die Übereinstimmung zwischen der durch das Sensormittel erfassten im Draht wirkenden Kraft und der tatsächlich im Draht wirkenden Kraft zumindest nahezu identisch. Wenn das mindestens eine Sensormittel mittelbar oder unmittelbar an dem Umlenkmittel angeordnet ist, lässt sich das Sensormittel auf einfache Weise im vorhandenen Bauraum der Rahmeneinheit anordnen. Dadurch, dass der Draht nach Passieren des Umlenkmittels lediglich durch die Drahtförderdüse geführt wird, ist die verbleibende Toleranzkette, bzw. Fehlerkette minimal.

Hierdurch lässt sich ein Wickeln des Bauteils noch drahtschonender und das Wickelergebnis noch präziser darstellen.

Bei einer Ausführungsform der Nadelwickelvorrichtung ist mindestens ein Spannelement vorgesehen, durch das das mindestens eine Sensormittel in Richtung auf die Drahtförderdüse und/oder das Umlenkmittel spannbar und/oder kalibrierbar ist.

Hierdurch ist es ermöglicht, das Sensormittel zu kalibrieren. Das Spannelement kann beispielsweise über eine Mutter vorgespannt werden und hierdurch der Sensor auf einfache Weise kalibriert werden.

Es sind Ausführungsformen der Nadelwickelvorrichtung denkbar, bei denen mindestens eines des mindestens einen Sensormittels einen Rollensensor, einen Kraftsensor und/oder einen Drucksensor umfasst.

Durch das mindestens eine Sensormittel kann die im Draht vorherrschende Kraft unmittelbar gemessen werden, wenn das Sensormittel unmittelbar am Draht anliegt oder mittelbar, wenn das mindestens eine Sensormittel unmittelbar oder mittelbar beispielsweise am Umlenkmittel anliegt. Hierdurch wird zunächst die im Draht wirkende Kraft auf das Umlenkmittel übertragen und die nun am Umlenkmittel vorherrschende Kraft in Richtung auf das Sensormittel durch das Sensormittel erfasst.

Es sind Ausführungsformen der Nadelwickelvorrichtung denkbar, bei denen die Wickelnadel nur innerhalb eines begrenzten Winkelbereichs um die Rotationsachse bewegbar ist. Bei einer Ausführungsform der Nadelvorrichtung ist vorgesehen, dass die Wickelnadel an einem an der Rahmeneinheit festgelegten Lagerelement drehfest festgelegt ist und/oder bei denen die Wickelnadel um die Rotationsachse bezüglich weiterer Komponenten berührungsfrei um 360° dreh- oder schwenkbar ist.

Hierdurch ist die Nadelwickelvorrichtung an Bauteile mit unterschiedlichen Geometrien flexibel anpassbar.

Der Schwenkantrieb kann technisch beliebig umgesetzt sein, sofern er der Funktion nachkommt, die Wickelnadel um die Rotationsachse zu bewegen. Hierbei erweist es sich als vorteilhaft, wenn der Schwenkantrieb eine Antriebswelle, die insbesondere parallel oder schräg zur Bauteildrehachse verläuft, mindestens eine Übertragungseinheit und/oder mindestens ein zwischen Antriebswelle und Übertragungseinheit angeordnetes Getriebemittel umfasst.

Die Antriebswelle kann parallel zur Bauteildrehachse verlaufen. Hierdurch ist die Nadelwickelvorrichtung kompakt ausbildbar. Dadurch, dass der Schwenkantrieb eine Übertragungseinheit umfassen kann, die durch ein Getriebemittel mit der Antriebswelle verbindbar ist, kann die Wickelnadel beabstandet zur Antriebswelle angeordnet sein. Bei Ausführungsformen der Nadelwickelvorrichtung sind Geometrien der Rahmeneinheit denkbar, die einen L-förmigen Querschnitt umfassen. Solchenfalls kann die Wickelnadel an einem freien Ende der L-förmigen Kontur der Rahmeneinheit angeordnet sein und die Antriebswelle parallel zu einem weiteren Element der L-förmigen Kontur der Rahmeneinheit verlaufen.

Bei einer Weiterbildung letztgenannter Ausführungsform ist vorgesehen, dass das Getriebemittel mindestens ein drehfest an der Antriebswelle festgelegtes Schneckenrad und/oder mindestens ein drehfest an einer drehbar gelagerten Koppelwelle gelagertes und in Eingriff mit dem Schneckenrad stehendes oder bringendes Zahnrad umfasst.

Hierdurch lässt sich auf einfache Weise die Kraft der Antriebswelle übertragen. Das Getriebemittel kann ein Schneckenradgetriebe umfassen.

Um die Kraft auf einfache Weise von der Koppelwelle in Richtung auf die Wickelnadel zu übertragen, erweist es sich als vorteilhaft, wenn die Übertragungseinheit mindestens ein Übertragungsmittel umfasst, das einerseits an der Koppelwelle drehfest angeordnet ist und andererseits drehfest mit der Wickelnadel oder einem Lagerelement verbunden ist, an dem die Wickelnadel drehfest festgelegt und um die Rotationsachse dreh- oder schwenkbar ist.

Hierbei kann das mindestens eine Übertragungsmittel ein Zahnrad, einen Riemen und/oder eine Kette umfassen.

Hierdurch lässt sich auf technisch konstruktiv einfache Weise die Kraft von der Koppelwelle in Richtung auf die Wickelnadel übertragen.

Um ein Anpassen, insbesondere Integrieren der Übertragungseinheit in die Rahmeneinheit zu ermöglichen, ist bei einer Ausführungsform der Nadelwickelvorrichtung vorgesehen, dass die Übertragungseinheit zwei Übertragungsmittel umfasst, wobei ein erstes Übertragungsmittel einerseits drehfest an der Koppelwelle und andererseits drehfest an einer Zwischenwelle angeordnet ist und ein zweites Übertragungsmittel einerseits drehfest an der Zwischenwelle und andererseits drehfest mit der Wickelnadel oder dem Lagerelement verbunden ist, an dem die Wickelnadel drehfest festgelegt und um die Rotationsachse dreh- oder schwenkbar ist.

Wenn das Übertragungsmittel einen Riemen und/oder eine Kette umfasst, kann nie ganz vermieden werden, dass dieses in gewissen Bereichen, der Schwerkraft folgend, durchhängt. Um das Übertragungsmittel zu straffen und um hierdurch die Ansteuerbarkeit der Wickelnadel zu verbessern, umfasst ein Ausführungsbeispiel der Nadelwickelvorrichtung eine Spanneinheit, durch die wenigstens ein Abschnitt mindestens eines des mindestens einen Übertragungsmittels quer oder schräg zu seiner Bewegungsrichtung auslenkbar ist.

Schließlich wird die Aufgabe gelöst durch ein Verfahren zum Betreiben einer Nadelwickelvorrichtung zum Bewickeln eines Bauteils einer elektrischen Maschine mit mindestens einem der zuvor genannten Merkmale mit den Schritten:
a. Erfassen einer Position der Rahmeneinheit bezüglich des Bauteils und/oder eines Winkels zwischen Drahtförderdüse und Bauteildrehachse durch die Steuereinheit;
b. Erfassen eines kleinsten Winkels zwischen einem Drahtabschnitt unmittelbar nach Passieren der Drahtförderdüse und einem Drahtabschnitt unmittelbar vor Passieren der Drahtförderdüse durch mindestens ein Sensormittel und/oder Berechnen des kleinsten Winkels zwischen dem Drahtabschnitt unmittelbar nach Passieren der Drahtförderdüse und dem Drahtabschnitt unmittelbar vor Passieren der Drahtförderdüse durch die Steuereinheit zumindest durch die Position der Rahmeneinheit bezüglich des Bauteils und/oder des Winkels zwischen Drahtförderdüse und Bauteildrehachse;
c. Erfassen einer auf den Draht wirkenden Kraft mittelbar oder unmittelbar durch das mindestens eine Sensormittel; und
d. Einstellen, insbesondere Vergrößern, des kleinsten Winkels zwischen dem Drahtabschnitt unmittelbar nach Passieren der Drahtförderdüse und dem Drahtabschnitt unmittelbar vor Passieren der Drahtförderdüse durch Ansteuern des Schwenkantriebs durch die Steuereinheit zum Vergrößern oder Verkleinern des Winkels zwischen Drahtförderdüse und Bauteildrehachse, wenn die erfasste auf den Draht wirkende Kraft eine in der Steuereinheit hinterlegte Soll-Kraft erreicht oder überschreitet.

Das Erfassen einer Position der Rahmeneinheit bezüglich des Bauteils kann seitens der Steuereinheit beispielsweise aus den Daten eines Manipulators, mit dem die Nadelwickelvorrichtung bezüglich der Bauteildrehachse bewegt wird, ausgelesen werden. Das Erfassen des Winkels zwischen Drahtförderdüse und Bauteildrehachse durch die Steuereinheit, kann beispielsweise durch Auslesen der Motorstellung des Schwenkantriebs erfasst werden.

Darüber hinaus kann das Erfassen eines kleinsten Winkels zwischen einem Drahtabschnitt unmittelbar nach Passieren der Drahtförderdüse und einem Drahtabschnitt unmittelbar vor Passieren der Drahtförderdüse durch mindestens ein Sensormittel, beispielsweise ein außerhalb der Nadelwickelvorrichtung angeordnetes Sensormittel umfassen. Alternativ oder ergänzend hierzu kann der Winkel auch durch die im Schritt a. erfassten Daten berechnet werden.

Ferner kann Schritt d. auf die Fälle beschränkt werden, in denen ausreichend freier Raum zur Verfügung steht, um eine Kollision der Nadelwickelvorrichtung mit weiteren Bauteilen zu vermeiden.

Weitere Merkmale, Einzelheiten und Vorteile der Erfindung ergeben sich aus den beigefügten Patentansprüchen, aus der zeichnerischen Darstellung und nachfolgenden Beschreibung einer bevorzugten Ausführungsform der Nadelwickelvorrichtung und des Verfahrens.

In der Zeichnung zeigt:
- Figur 1: Eine schematische Schnittansicht einer Ausführungsform der Nadelwickelvorrichtung ;
- Figur 2: Eine perspektivische Vorderansicht auf das Ausführungsbeispiel der Nadelwickelvorrichtung gemäß Figur 1 ;
- Figur 3: Eine Schnittansicht durch die Nadelwickelvorrichtung gemäß Figur 2;
- Figur 4: Ein schematisches Ablaufdiagramm eines Ausführungsbeispiels des erfindungsgemäßen Verfahrens.

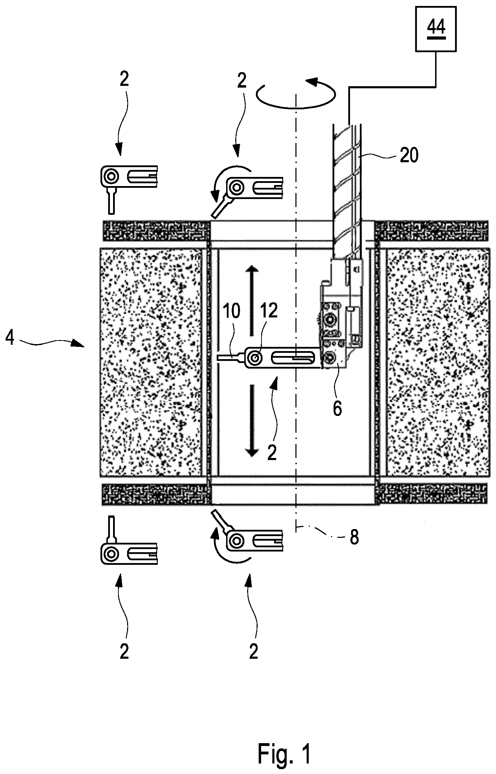

Die Figuren 1 bis 3 zeigen ein Ausführungsbeispiel einer insgesamt mit dem Bezugszeichen 2 versehene Nadelwickelvorrichtung zum Bewickeln eines Bauteils 4. Das Bauteil 4 kann einen Stator oder Rotor einer elektrischen Maschine umfassen.

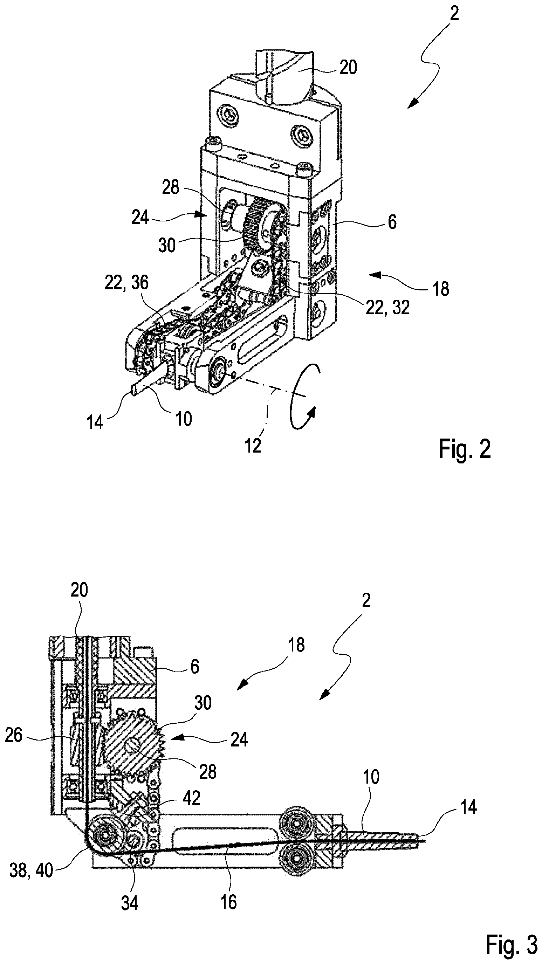

Figur 1 zeigt eine Schnittansicht einer schematischen Darstellung der Nadelwickelvorrichtung 2, die an unterschiedlichen Positionen des Bauteils 4 angeordnet ist. Die Figuren 2 und 3 zeigen eine Detailansicht der Nadelwickelvorrichtung 2 einmal in symmetrischer Ansicht (Figur 2) und einmal in geschnittener Ansicht (Figur 3).

Die Nadelwickelvorrichtung 2 umfasst eine Rahmeneinheit 6, die innerhalb des Bauteils 4 parallel zu einer Bauteildrehachse 8 und außerhalb des Bauteils 4 schräg oder quer zur Bauteildrehachse 8 bewegbar ist.

Die Nadelwickelvorrichtung 2 umfasst darüber hinaus eine Wickelnadel 10, die mit einem Ende an der Rahmeneinheit 6 um eine Rotationsachse 12 dreh- oder schwenkbar festgelegt ist. An ihrem freien Ende umfasst die Wickelnadel 10 eine Drahtförderdüse 14, aus der ein Draht 16 austretbar ist und mit dem das Bauteil 4 wickelbar ist. Um die Wickelnadel 10 um die Rotationsachse 12 zu verdrehen, umfasst die Nadelwickelvorrichtung 2 einen Schwenkantrieb 18. Bei dem in den Figuren gezeigten Ausführungsbeispiel umfasst der Schwenkantrieb 18 eine Antriebswelle 20, die insbesondere parallel zur Bauteildrehachse 8 verläuft, eine Übertragungseinheit 22 und ein zwischen Übertragungseinheit 22 und Antriebswelle 20 angeordnetes Getriebemittel 24.

Bei dem in den Figuren gezeigten Ausführungsbeispiel der Nadelwickelvorrichtung 2 umfasst das Getriebemittel 24 ein Schneckenradgetriebe. Hierzu umfasst das Getriebemittel 24 ein drehfest an der Antriebswelle 20 festgelegtes Schneckenrad 26 sowie ein drehfest an einer drehbar gelagerten Koppelwelle 28 gelagertes und in Eingriff mit dem Schneckenrad 26 stehendes Zahnrad 30.

Die Übertragungseinheit 22 umfasst bei den in den Figuren gezeigten Ausführungsbeispielen ein erstes Übertragungsmittel 32, das einerseits drehfest an der Koppelwelle 28 und andererseits an einer Zwischenwelle 34 angeordnet ist. An der Zwischenwelle 34 ist ein zweites Übertragungsmittel 36 angeordnet, das mit seinem freien Ende drehfest mit der Wickelnadel 10 verbunden ist.

Um den Draht zur Drahtförderdüse 14 zu transportieren, umfasst die Nadelwickelvorrichtung 2 eine Drahtzuführung 38, die ein in der Rahmeneinheit 6 angeordnetes Umlenkmittel 40 umfasst. Durch das Umlenkmittel 40 der Drahtzuführung 38 ist der Draht 16 bezüglich seiner Bewegungsrichtung umlenkbar und der Drahtförderdüse 14 bezüglich weiterer Komponenten der Nadelwickelvorrichtung 2 berührungsfrei zuführbar. Bei dem in den Figuren gezeigten Ausführungsbeispiel ist am Umlenkmittel 40 ein Sensormittel 42 angeordnet, mit dem die auf den Draht 16 wirkende Kraft erfassbar ist. Darüber hinaus umfass die Nadelwickelvorrichtung 2 eine Steuereinheit 44, der das Sensormittel 42 funktional zugeordnet ist und durch die der Schwenkantrieb 18 ansteuerbar ist. Durch die Steuereinheit 44 ist der Schwenkantrieb 18 derart ansteuerbar, dass ein Winkel zwischen Drahtförderdüse 14 und Bauteildrehachse 8 zumindest in Abhängigkeit der Position der Rahmeneinheit 6 und/oder der erfassten am Draht 16 wirkenden Kräfte einstellbar ist.

Bei dem in den Figuren gezeigten Ausführungsbeispiel ist das Sensormittel 42 am Umlenkmittel 40 angeordnet. Hierdurch sind die auf den Draht 16 wirkenden Kräfte mittelbar erfassbar.

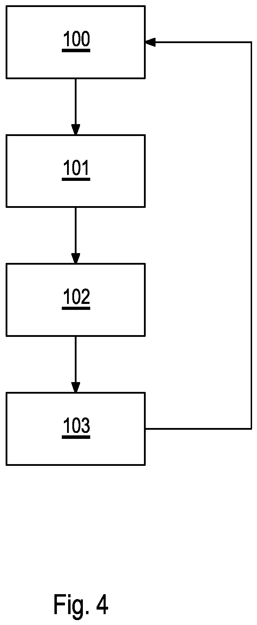

Figur 4 zeigt ein schematisches Ablaufdiagramm eines erfindungsgemäßen Verfahrens. Unter Bezugnahme auf die Darstellungen des Ausführungsbeispiels in den Figuren 1 bis 3 wird nachfolgend das Verfahren erläutert:
In einem ersten Schritt 100 wird eine Position der Rahmeneinheit 6 bezüglich des Bauteils 4 und/oder ein Winkel zwischen der Drahtförderdüse 14 und der Bauteildrehachse 8 durch die Steuereinheit 44 erfasst.

In einem hieran anschließenden Schritt 101 wird ein kleinster Winkel zwischen einem Drahtabschnitt unmittelbar nach Passieren der Drahtförderdüse 14 und einem Drahtabschnitt unmittelbar vor Passieren der Drahtförderdüse 14 erfasst. Alternativ oder ergänzend hierzu kann dieser kleinste Winkel auch durch die Steuereinheit 44 berechnet werden, insbesondere auf Grundlage der im Schritt 100 erfassten Positionen der Rahmeneinheit 6 bezüglich des Bauteils 4 und/oder des Winkels zwischen Drahtförderdüse 14 und Bauteildrehachse 8.

In einem weiteren Schritt 102 wird durch das Sensormittel 42 eine auf den Draht 16 wirkende Kraft erfasst.

Wenn die auf den Draht 16 wirkende Kraft eine in der Steuereinheit 44 hinterlegte Soll-Kraft erreicht oder überschreitet, wird in einem Schritt 103 der kleinste Winkel eingestellt, insbesondere vergrößert, durch Ansteuern des Schwenkantriebs 18 durch die Steuereinheit 44. Hierdurch kann der kleinste Winkel abgeflacht werden und hierdurch die auf den Draht 16 wirkenden Kräfte reduziert werden.

Die in der vorstehenden Beschreibung, in den Ansprüchen sowie in der Zeichnung offenbarten Merkmale der Erfindung, können sowohl einzeln, als auch in jeder beliebigen Kombination in der Verwirklichung der Erfindung in ihren verschiedenen Ausführungsformen wesentlich sein.

### Bezugszeichenliste

- 2: Nadelwickelvorrichtung
- 4: Bauteil
- 6: Rahmeneinheit
- 8: Bauteildrehachse
- 10: Wickelnadel
- 12: Rotationsachse
- 14: Drahtförderdüse
- 16: Draht
- 18: Schwenkantrieb
- 20: Antriebswelle
- 22: Übertragungseinheit
- 24: Getriebemittel
- 26: Schneckenrad
- 28: Koppelwelle
- 30: Zahnrad
- 32: erstes Übertragungsmittel
- 34: Zwischenwelle
- 36: zweites Übertragungsmittel
- 38: Drahtzuführung
- 40: Umlenkmittel
- 42: Sensormittel
- 44: Steuereinheit

## Patentansprüche

1. Nadelwickelvorrichtung (2) zum Bewickeln eines elektromagnetisch wirksamen Bauteils (4) einer elektrischen Maschine, wie Stator oder Rotor, mit mindestens einer Rahmeneinheit (6), mit mindestens einer Wickelnadel (10), die mit einem Ende an der Rahmeneinheit (6) um eine Rotationsachse (12) dreh- oder schwenkbar festlegbar oder festgelegt ist und die an ihrem freien Ende eine Drahtförderdüse (14) aufweist, mit mindestens einem Schwenkantrieb (18), durch den die Wickelnadel (10) automatisch um die Rotationsachse (12) dreh- oder schwenkbar ist, mit mindestens einer Drahtzuführung (38), , und mit mindestens einem in der Rahmeneinheit (6) angeordneten Sensormittel (42), durch das mittelbar oder unmittelbar eine auf den Draht (16) wirkende Kraft erfassbar ist und mit mindestens einer Steuereinheit (44), der mindestens eines des mindestens einen Sensormittels (42) funktional zugeordnet ist und durch die der Schwenkantrieb (18) ansteuerbar ist, um einen Winkel zwischen Drahtförderdüse (14) und Bauteildrehachse (8) zumindest in Abhängigkeit der Position der Rahmeneinheit (6) bezüglich des Bauteils (4) und der erfassten am Draht (16) wirkenden Kraft einzustellen.

2. Nadelwickelvorrichtung (2) nach Anspruch 1, **dadurch gekennzeichnet, dass** die Drahtzuführung (38) mindestens ein in der oder an der Rahmeneinheit (6) angeordnetes Umlenkmittel (40) umfasst, durch das ein Draht (16) in seiner Bewegungsrichtung umlenkbar und der Drahtförderdüse (14) bezüglich weiterer in der Rahmeneinheit (6) angeordneten Komponenten berührungsfrei zuführbar ist.

3. Nadelwickelvorrichtung (2) nach Anspruch 1 oder 2, **dadurch gekennzeichnet, dass** mindestens eines des mindestens einen Sensormittels (42) unmittelbar in oder an der Drahtförderdüse (14) anordenbar oder angeordnet ist und/oder dass mindestens eines des mindestens einen Sensormittels (42) unmittelbar in oder an dem Umlenkmittel (40) anordenbar oder angeordnet ist, durch das eine auf das Umlenkmittel (40) wirkende Kraft erfassbar ist.

4. Nadelwickelvorrichtung (2) nach mindestens einem der vorhergehenden Ansprüche , **gekennzeichnet durch** mindestens ein Spannelement, durch das das mindestens eine Sensormittel (42) in Richtung auf die Drahtförderdüse (14) und/oder das Umlenkmittel (40) spannbar und/oder kalibrierbar ist.

5. Nadelwickelvorrichtung (2) nach mindestens einem der vorhergehenden Ansprüche, **dadurch gekennzeichnet, dass** mindestens eines des mindestens einen Sensormittels (42) einen Rollensensor, einen Kraftsensor und/oder einen Drucksensor umfasst.

6. Nadelwickelvorrichtung (2) nach mindestens einem der vorhergehenden Ansprüche, **dadurch gekennzeichnet, dass** die Wickelnadel (10) an einem an der Rahmeneinheit (6) festgelegten Lagerelement drehfest festgelegt ist und/oder dass die Wickelnadel (10) um die Rotationsachse (12) bezüglich weiterer Komponenten berührungsfrei um 360° dreh- oder schwenkbar ist.

7. Nadelwickelvorrichtung (2) nach mindestens einem der vorhergehenden Ansprüche, **dadurch gekennzeichnet, dass** der Schwenkantrieb (18) eine Antriebswelle (20), die insbesondere parallel oder schräg zur Bauteildrehachse (8) verläuft, mindestens eine Übertragungseinheit (22) und/oder mindestens ein zwischen Antriebswelle (20) und Übertragungseinheit (22) angeordnetes Getriebemittel (24) umfasst.

8. Nadelwickelvorrichtung (2) nach Anspruch 7, **dadurch gekennzeichnet, dass** das Getriebemittel (24) mindestens ein drehfest an der Antriebswelle (20) festgelegtes Schneckenrad (26) und/oder mindestens ein drehfest an einer drehbar gelagerten Koppelwelle (28) gelagertes und in Eingriff mit dem Schneckenrad (26) stehendes oder bringendes Zahnrad (30) umfasst.

9. Nadelwickelvorrichtung (2) nach Anspruch 7 oder 8, **dadurch gekennzeichnet, dass** die Übertragungseinheit (22) mindestens ein Übertragungsmittel umfasst, das einerseits an der Koppelwelle (28) drehfest angeordnet ist und andererseits drehfest mit der Wickelnadel (10) oder einem Lagerelement verbunden ist, an dem die Wickelnadel (10) drehfest festgelegt und um die Rotationsachse (12) dreh- oder schwenkbar ist.

10. Nadelwickelvorrichtung (2) nach Anspruch 9, **dadurch gekennzeichnet, dass** das mindestens eine Übertragungsmittel ein Zahnrad (30), einen Riemen und/oder eine Kette umfasst.

11. Nadelwickelvorrichtung (2) nach Anspruch 9 oder 10, **dadurch gekennzeichnet, dass** die Übertragungseinheit (22) zwei Übertragungsmittel umfasst, wobei ein erstes Übertragungsmittel (32) einerseits drehfest an der Koppelwelle (28) und andererseits drehfest an einer Zwischenwelle (34) angeordnet ist und ein zweites Übertragungsmittel (36) einerseits drehfest an der Zwischenwelle (34) und andererseits drehfest mit der Wickelnadel (10) oder dem Lagerelement verbunden ist, an dem die Wickelnadel (10) drehfest festgelegt und um die Rotationsachse (12) dreh- oder schwenkbar ist.

12. Nadelwickelvorrichtung (2) nach einem der Ansprüche 7 bis 11, **gekennzeichnet durch** eine Spanneinheit, durch die wenigstens ein Abschnitt mindestens eines des mindestens einen Übertragungsmittels quer oder schräg zu seiner Bewegungsrichtung auslenkbar ist.

13. Verfahren zum Betreiben einer Nadelwickelvorrichtung (2) zum Bewickeln eines elektromagnetisch wirksamen Bauteils (4) einer elektrischen Maschine nach einem der Ansprüche 1 bis 12, mit den Schritten:
a. Erfassen einer Position der Rahmeneinheit (6) bezüglich des Bauteils (4) und/oder eines Winkels zwischen Drahtförderdüse (14) und Bauteildrehachse (8) durch die Steuereinheit (44);
b. Erfassen eines kleinsten Winkels zwischen einem Drahtabschnitt unmittelbar nach Passieren der Drahtförderdüse (14) und einem Drahtabschnitt unmittelbar vor Passieren der Drahtförderdüse (14) durch mindestens ein Sensormittel (42) und/oder Berechnen des kleinsten Winkels zwischen dem Drahtabschnitt unmittelbar nach Passieren der Drahtförderdüse (14) und dem Drahtabschnitt unmittelbar vor Passieren der Drahtförderdüse (14) durch die Steuereinheit (44) zumindest durch die Position der Rahmeneinheit (6) bezüglich des Bauteils (4) und/oder des Winkels zwischen Drahtförderdüse (14) und Bauteildrehachse (8);
c. Erfassen einer auf den Draht (16) wirkenden Kraft mittelbar oder unmittelbar durch das mindestens eine Sensormittel (42); und
d. Einstellen, insbesondere Vergrößern, des kleinsten Winkels zwischen dem Drahtabschnitt unmittelbar nach Passieren der Drahtförderdüse (14) und dem Drahtabschnitt unmittelbar vor Passieren der Drahtförderdüse (14) durch Ansteuern des Schwenkantriebs (18) durch die Steuereinheit (44) zum Vergrößern oder Verkleinern des Winkels zwischen Drahtförderdüse (14) und Bauteildrehachse (8), wenn die erfasste auf den Draht (16) wirkende Kraft eine in der Steuereinheit (44) hinterlegte Soll-Kraft erreicht oder überschreitet.
